# FASCICULE DE BREVET EUROPEEN

(11) **EP 2 491 719 B1**
(45) Date de publication et mention de la délivrance du brevet: **04.06.2014**
(21) Numéro de dépôt: 10785471.3
(22) Date de dépôt: 14.10.2010
(51) Int. Cl.: H04N 19/70, H04N 19/174, H04N 19/436

(54) **PROCÉDÉ D'ENCAPSULATION DE SOUS-FLUX DE DONNÉES, PROCÉDÉ DE DÉSENCAPSULATION ET PROGRAMMES D'ORDINATEUR CORRESPONDANTS**
VORFAHREN UND COMPUTERPROGRAMM FÜR KAPSELUNG UND ENTKAPSELUNG VON DATATEILSTRÖME
METHOD AND COMPUTER PROGRAM FOR ENCAPSULATION AND DE-ENCAPSULATION OF DATA SUB-STREAMS

(30) Priorité: 23.10.2009 FR 0957471
(43) Date de publication de la demande: 29.08.2012
(73) Titulaire: Orange, 75015 Paris (FR)
(72) Inventeur: AMONOU, Isabelle, F-35510 Cesson Sevigne (FR); CAMMAS, Nathalie, F-35490 Sens De Bretagne (FR); PATEUX, Stéphane, F-35700 Rennes (FR); RELIER, Stéphanie, F-35412 Domloup (FR)
(86) Numéro de dépôt international: PCT/FR2010/052179
(87) Numéro de publication internationale: WO 2011/048303

(56) Documents cités:
- EP-A1- 2 023 637
- US-A1- 2009 168 868
- US-B1- 6 185 339

## Description

### 1. Domaine de l'invention

Le domaine de l'invention est celui du codage et du décodage d'images, et notamment du transport de flux de données vidéo représentatives d'une série d'images successives.

L'invention peut ainsi, notamment, s'appliquer au codage vidéo mis en oeuvre dans les codeurs vidéo actuels (MPEG, H.264, etc) ou à venir (ITU-T/VCEG (H.265) ou ISO/MPEG (HVC)).

### 2. Art antérieur

Les codeurs vidéo actuels (MPEG, H264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, des images I sont codées par prédiction spatiale (prédiction intra), des images P et B sont codées par prédiction temporelle par rapport à d'autres images I, P ou B codées-décodées à l'aide d'une compensation en mouvement. De plus, pour chaque bloc est codé un bloc résiduel correspondant au bloc original diminué d'une prédiction. Les coefficients de ce bloc sont quantifiés après une éventuelle transformation, puis codés par un codeur entropique.

On s'intéresse ici aux sous-flux de données issus du codeur entropique et plus particulièrement aux sous-flux qui peuvent être décodés en parallèle.

On connaît un document US2009168868A1, intitulé « Systems and apparatuses for performing cabac parallel encoding and decoding », décrivant une méthode permettant un type de parallélisation du codage et/ou du décodage dans un codeur de type « CABAC ». Selon un mode de réalisation, une image est découpée en tranches, appelées « slices », et le codeur « CABAC » est initialisé à chaque début de slice, afin d'optimiser l'initialisation des probabilités. Ce mode de réalisation permet un encodage de slices en sous-flux indépendants et donc un décodage en parallèle de ces sous-flux par plusieurs décodeurs. Cependant, comme il n'y a pas de prédiction entre les slices, cette technique de découpage n'est pas efficace en termes de compression.

On connaît en outre le document RFC 3984 de l'IETF (Internet Engineering Task Force) par S. Wenger, intitulé "RTP Payload Format for H264 Video", qui établit une distinction entre une couche de codage (VCL: Video Coding Layer) et une couche d'abstraction pour le transport des données encodées sur un réseau (NAL). Cette couche, la Network Abstraction Layer (NAL), encapsule les données encodées par la couche VCL du codeur H.264 dans des unités appelées NALUs (Network Abstraction Layer Units) adaptées au transport des données codées sur le réseau et au multiplexage de ces données.

Ce document enseigne qu'une séquence vidéo encodée est représentée par une séquence de NAL Units. Les NALU peuvent être des NALU de données (VCL) ou de signalisation (SEI, SPS, PPS,...). Lorsque les images sont découpées en slices, le sous-flux de données issu de l'encodage d'une slice ou d'une partie d'une slice est encapsulé dans une NALU.

Selon un mode de réalisation, plusieurs NALUs sont agrégées dans la partie utile ("payload", en anglais) d'un paquet de transport de type RTP. Dans un mode d'agrégation particulier, des informations représentatives des tailles des NALUs agrégées sont insérées dans le paquet RTP obtenu.

Selon un autre mode de réalisation, une slice peut être découpée et insérée dans des NALUs différentes, chacune étant transportée dans un paquet RTP distinct.

### 3. Inconvénients de l'art antérieur

L'insertion de la taille des sous-flux concaténés dans un même paquet est nécessaire pour permettre à un décodeur d'accéder aux différents sous-flux reçus et de les faire décoder par des processeurs différents. Toutefois, la signalisation supplémentaire induite génère un surcoût en débits, proportionnel au nombre de sous-flux.

De plus, la concaténation des sous-flux de données impose aux processeurs du décodeur d'attendre d'avoir reçu plusieurs sous-flux avant de pouvoir commencer le décodage. Or certaines applications proposent de commencer à décoder un flux vidéo dès qu'une partie du flux est disponible au décodeur. Dans ce cas, l'utilisation de processus travaillant en parallèle perd de son intérêt car le décodeur recevant les sous-flux les uns après les autres, il commence à décoder le premier sous-flux dès que celui-ci est en partie reçu à l'aide d'un premier processeur. Pour qu'un deuxième processeur puisse commencer à décoder en parallèle un deuxième sous-flux, ce deuxième processeur doit attendre que le premier sous-flux ait été complètement reçu. La mise en parallèle des processeurs n'est alors pas optimale car le délai entre le début de traitement des processus est trop long.

Il existe donc un besoin pour une nouvelle technique d'encapsulation de sous-flux dans un flux de données, qui permette le décodage parallèle des sous-flux par une pluralité de décodeurs tout en limitant le surcoût en débit dû à la signalisation.

Il existe en outre un besoin d'une nouvelle technique d'encapsulation de sous-flux dans un flux de données qui permette de démarrer rapidement le décodage parallèle des données codées relatives aux différents sous-flux.

### 4. Exposé de l'invention

Ces objectifs, ainsi que d'autres qui apparaîtront par la suite, sont atteints à l'aide d'un procédé d'encapsulation d'une pluralité de sous-flux de données codées dans un train binaire, un sous-flux de données codées étant obtenu par codage entropique d'une sous-séquence de symboles représentative d'une image ou d'une série d'images, ledit procédé comprenant une étape de création d'un train binaire encapsulant ladite pluralité de sous-flux.

Selon l'invention, ledit procédé comprend les étapes suivantes :
- parcours de ladite pluralité de sous-flux selon un ordre de parcours prédéterminé de l'image,
- groupement des sous-flux de données parcourus en couples de sous-flux selon un ordonnancement prédéterminé desdits sous-flux ;
- à partir d'un couple, obtention d'un couple symétrique par inversion d'un ordre des données composant le deuxième sous-flux du couple;
- concaténation des couples obtenus en une séquence; et en ce que
- l'étape de création du train binaire comprend l'encapsulation de ladite séquence et d'informations relatives à un nombre de sous-flux et aux tailles des couples de sous-flux symétriques.

L'invention consiste donc à regrouper les sous-flux en couples, à rendre ces couples symétriques en inversant l'ordre des données du deuxième sous-flux et à indiquer dans le train binaire créé la taille globale desdits couples de sous-flux au lieu de la taille de chaque sous- flux.

On comprend qu'à nombre égal de sous-flux, la quantité de données de signalisation nécessaire au décodage parallèle des sous-flux est divisée par deux par rapport à l'art antérieur.

Les couples formés sont dits symétriques, car les données utiles relatives au deuxième sous-flux sont inversées pour permettre leur lecture par la fin. On comprend que de cette manière, dès que les données relatives au couple symétrique ont été reçues par un décodeur, les deux sous-flux peuvent commencer à être décodés en parallèle, le premièr par le début, le deuxième par la fin.

L'invention concerne aussi un procédé de désencapsulation d'un train binaire comprenant une pluralité de sous-flux de données codées, un sous-flux de données étant obtenu par codage entropique d'une sous-séquence de symboles représentative d'une image ou d'une série d'images, ledit train binaire étant obtenu par le procédé d'encapsulation selon l'invention. Le procédé de désencapsulation selon l'invention comprend les étapes suivantes :
- extraction des informations relatives à un nombre de sous-flux et à des tailles de couples de sous-flux;
- parcours des données utiles du train binaire reçu, au cours duquel les étapes suivantes sont mises en oeuvre :
- tant que le parcours n'est pas achevé :
   - identification d'une position de début et d'une position de fin d'un couple à partir desdites informations extraites;
   - envoi des données utiles relatives au couple symétrique, situées entre lesdites positions de début et de fin à un dispositif de décodage apte à faire effectuer par deux processeurs distincts un décodage en parallèle des données utiles relatives aux deux éléments dudit couple, à partir desdites positions, le premier dans un sens usuel et le second dans un sens inverse de lecture des données.

On comprend que les positions de début et de fin des données utiles relatives à un couple de sous-flux symétriques peuvent être facilement identifiées dans le train binaire à partir de l'information relative à la taille dudit couple de sous-flux symétriques transmise comme métadonnée dans le train binaire.

L'invention propose donc une approche nouvelle et inventive de l'encapsulation de sous-flux vidéo, qui permet de limiter le surcoût en débit dû à la signalisation des sous-flux dans le train binaire.

Selon un aspect de l'invention, le procédé d'encapsulation comprend en outre les étapes suivantes, destinées à être mises en oeuvre pour chaque couple de sous-flux symétriques, ledit couple comprenant un premier et un deuxième sous-flux:
- découpage du premier et du deuxième sous-flux en fragments de taille fixe;
- groupement des fragments obtenus dans un couple de sous-flux symétriques en couples de fragments symétriques en prélevant, pour chaque couple un premier fragment dans le premier sous-flux du couple à partir du début des données relatives au couple de sous-flux, selon un sens usuel de lecture, et un deuxième fragment dans le deuxième sous-flux du couple à partir de la fin des données relatives au couple de sous-flux, selon un sens inverse de lecture.

Selon cet aspect de l'invention, l'étape de concaténation des couples en une séquence de couples symétriques s'applique aux couples de fragments obtenus et consiste à prélever les couples de fragments issus des couples de sous-flux selon un ordre de parcours itératif prédéterminé des couples de sous-flux et l'étape de création du train binaire comprend l'ajout d'une information relative à la taille fixe des fragments.

On comprend que des couples de fragments symétriques sont construits à partir des sous-flux des couples de sous-flux symétriques. Ils sont ensuite concaténés dans une séquence qui forme les données utiles du train binaire créé. Les couples de fragments symétriques étant de taille inférieure aux couples de sous-flux symétriques, il est possible de démarrer le décodage plus rapidement.

On comprend en outre que plus le fragment est choisi petit, plus le démarrage du décodage est rapide. Ce mode de réalisation est bien adapté aux applications, concernant par exemple la mise en place d'une communication entre personnes, qui nécessitent que le terminal de décodage commence à décoder une image dès qu'il a reçu une partie des données de cette image. La taille d'un fragment est choisie en fonction de différents critères, avantageusement les dimensions de l'image et/ou des caractéristiques du protocole de transport utilisé pour transporter le train binaire créé.

L'invention permet donc de s'adapter aux contraintes de certaines applications multimédia.

Selon cet aspect de l'invention, le procédé de désencapsulation selon l'invention est particulier en ce que l'étape d'extraction comprend en outre l'extraction d'informations relatives à la taille fixe d'un fragment et les étapes d'identification et d'envoi s'appliquent aux couples de fragments symétriques.

On comprend que la seule métadonnée supplémentaire générée par la fragmentation des sous-flux est l'information relative à la taille fixe d'un fragment. Le fait de fragmenter les sous-flux n'introduit donc pas de surcoût en débits important. La connaissance de la taille d'un fragment permet au procédé de désencapsulation d'identifier les positions de début et de fin des couples de fragments symétriques dont la taille est le double de la taille d'un fragment.

On notera que le procédé de désencapsulation détecte quand il a parcouru l'ensemble des données utiles relatives à chaque couple de sous-flux, en comparant une variable de taille des données utiles parcourues pour chaque couple de sous-flux, incrémentée d'une valeur de deux valeurs de taille d'un fragment après traitement d'un couple symétrique, à la taille de chaque couple de sous flux transmise comme métadonnée. Il n'a donc pas besoin d'information supplémentaire pour désencapsuler les couples de fragments de sous-flux du train binaire reçu.

L'invention propose donc une solution au problème de l'encapsulation de sous-flux vidéo, qui réalise un compromis entre rapidité de démarrage du décodage parallèle et surcoût en débit de la signalisation nécessaire au décodage de ces sous-flux.

Selon un aspect de l'invention, le procédé d'encapsulation est particulier en ce que lesdites informations relatives aux tailles de couples de sous-flux symétriques comprennent les tailles des couples de sous-flux.

Un avantage, dans le mode de réalisation où les sous-flux sont fragmentés, est que ces métadonnées sont les mêmes que pour le mode de réalisation selon lequel les sous-flux ne sont pas fragmentés. Combinés à l'information à la taille fixe d'un fragment, ces métadonnées permettent d'identifier les données utiles relatives à chaque couple dans le train binaire et donc de désencapsuler le train binaire. Le surcoût de la fragmentation est donc très faible car limité à la taille fixe d'un fragment par rapport au mode de réalisation sans fragmentation.

Selon un autre aspect de l'invention, lesdites informations relatives aux tailles des couples de sous-flux symétriques comprennent un nombre de couples de fragments par couple de sous-flux et la taille des couples de fragments comprenant un dernier fragment d'un des sous-flux d'un couple de sous-flux.

Un avantage est de transporter une information relative à un nombre de fragments plutôt qu'à des tailles de couples de sous-flux en bits ou en octets.

Selon un autre aspect de l'invention, l'étape de création du train binaire comprend l'encapsulation d'une information relative à un mode d'encapsulation de la pluralité de sous-flux.

Avantageusement, cette information indique si un mode d'encapsulation simple (pas de fragmentation) ou complexe (fragmentation) a été utilisé. Ceci permet à un dispositif de désencapsulation selon l'invention d'adapter le traitement qu'il applique au train binaire reçu.

L'invention concerne aussi un dispositif d'encapsulation d'une pluralité de sous-flux de données codées dans un train binaire apte à mettre en oeuvre le procédé d'encapsulation selon l'invention.

L'invention concerne aussi un dispositif de désencapsulation d'une pluralité de sous-flux de données codées dans un train binaire apte à mettre en oeuvre le procédé de désencapsulation selon l'invention.

L'invention concerne aussi un dispositif de décodage d'une pluralité de sous-flux de données codées, un sous-flux de données étant obtenu par codage entropique d'une sous-séquence de symboles représentative d'une image ou d'une série d'images.

Selon l'invention, le procédé est particulier en ce qu'il comprend des moyens de réception de données utiles relatives à des couples symétriques obtenus à l'aide du procédé de désencapsulation d'un train binaire selon l'invention et des moyens de commande de décodage des deux éléments d'un couple reçu à des processeurs distincts.

On notera que les éléments d'un couple symétrique peuvent être des sous-flux ou des fragments de sous-flux de taille fixe selon les différents modes de réalisation de l'invention.

L'invention concerne également un signal portant un train binaire obtenu par le procédé selon l'invention.

Dans un mode particulier de réalisation, les différentes étapes des procédés d'encapsulation et de désencapsulation selon l'invention sont déterminées par des instructions de programmes d'ordinateurs.

En conséquence, l'invention vise aussi des programmes d'ordinateur sur un support d'informations, ces programmes étant susceptibles d'être mis en oeuvre respectivement dans des dispositifs d'encapsulation et de désencapsulation ou plus généralement dans un ordinateur, ces programmes comportant respectivement des instructions adaptées à la mise en oeuvre des étapes des procédés d'encapsulation et de désencapsulation qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un contexte de mise en oeuvre de l'invention;
- la figure 2a présente les principales étapes du procédé d'encapsulation, selon un premier mode de réalisation de l'invention;
- la figure 2b présente les principales étapes du procédé d'encapsulation, selon un deuxième mode de réalisation de l'invention;
- la figure 3a présente un exemple de dépendances entre plusieurs sous-flux de données codées représentative d'une image;
- les figures 3b et 3c présentent deux exemples de trains binaires obtenus selon l'invention à partir des sous-flux représentatifs de ladite image;
- les figures 4a et 4c présentent plus généralement la structure d'un train binaire selon l'invention obtenus respectivement selon les modes d'encapsulation simple et complexe;
- la figure 4b illustre l'étape de regroupement de fragments de sous-flux en couples de fragments selon un mode de réalisation de l'invention;
- la figure 5 présente les principales étapes du procédé de désencapsulation, selon un mode de réalisation de l'invention;
- les figures 6 et 7 présentent respectivement la structure d'un dispositif de codage et d'un dispositif de décodage, selon un mode de réalisation particulier de l'invention.

### 6. Description d'un mode de réalisation particulier de l'invention

L'invention concerne une technique d'encapsulation/désencapsulation de sous-flux de données qui s'applique à des données vidéo issues de standards de compression vidéo ou d'images. Elle peut être appliquée dans tout mécanisme de transport de flux vidéos, tel que MPEG-2 TS pour la diffusion de ces données sur des réseaux de télévision numérique ou RTP (Real Time Protocol, en anglais) pour leur transport sur des réseaux Internet.

Elle est destinée à au moins deux types d'applications. Le premier type d'application est celui où le terminal de décodage attend d'avoir reçu tous les paquets correspondant à une image de la séquence vidéo avant de démarrer son décodage. La télévision sur ADSL par exemple, nécessite une bufferisation de plusieurs images pour assurer la qualité de service (QoS). Le deuxième type d'application est celui où le terminal de décodage démarre le décodage d'une image dès qu'il a reçu une partie des données de cette image. Il s'agit, par exemple, de services de télévision sur mobile ou internet ou encore de vidéo-conférence, pour lesquels il est important de limiter un temps de latence avant l'affichage de la première image complète.

On notera que le procédé d'encapsulation selon l'invention est mis en oeuvre en amont d'un protocole de transport de données. Le train binaire créé selon l'invention pourra ensuite être formaté selon le protocole de transport choisi, que ce soit par exemple UDP, MPEG-2 TS ou encore RTP. Si le train binaire est trop grand par rapport à la taille maximale autorisée selon ce format de transport, celui-ci prend en charge la fragmentation du train binaire comme il le ferait d'un train binaire classique.

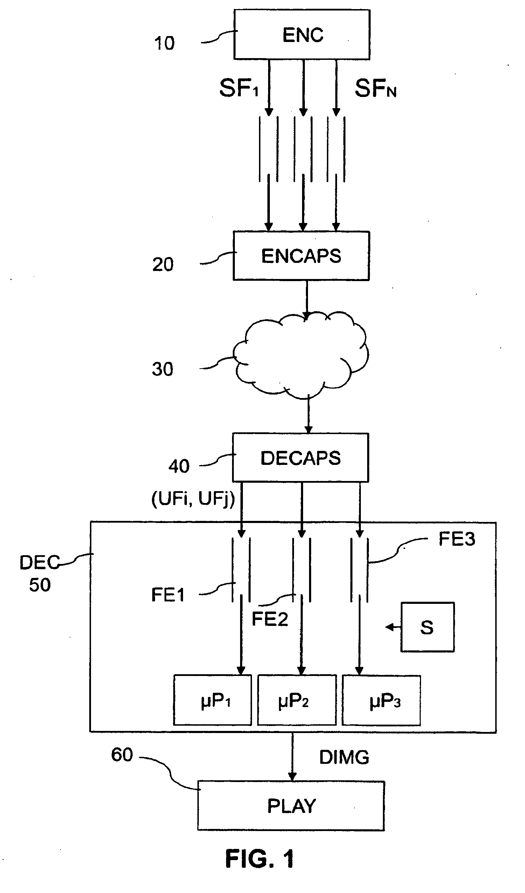

On présente en relation avec la **Figure 1** un exemple de contexte de mise en oeuvre de l'invention. Une image ou série d'images IMG est encodée par un dispositif d'encodage ENC, tel que, par exemple l'encodeur H264, décrit dans la norme ISO/IEC 14496-10, "Advanced Video Coding for Generic Audiovisual Services ITU-T Recommendation H.264". Un tel encodeur produit un flux de données codées.

De façon connue, un tel flux de données peut être constitué d'une pluralité de sous-flux de données codées représentatifs de sous-séquences d'images de type slices. De tels sous-flux sont indépendants les uns des autres et peuvent être décodés en parallèle, comme décrit dans le document RFC 3984 par S. Wenger, intitulé "RTP Payload Format for H264 Video" précédemment cité.

En variante, un encodeur peut produire une pluralité de sous-flux de données codées représentatifs d'un autre type de sous-séquences d'images, qui présentent des dépendances les uns avec les autres pour le décodage, mais peuvent être décodés en parallèle dès lors qu'on respecte des contraintes d'ordonnancement imposées par ces dépendances.

Dans le contexte de l'invention, on considère le cas où une pluralité de sous-flux de données codées SF1, SF2,..., SFN, avec N entier supérieur ou égal à 2, indépendants ou non, est obtenu.

La pluralité de sous-flux de données SF1, SF2,..., SFN est ensuite traitée par un dispositif d'encapsulation ENCAPS selon l'invention. Un tel dispositif est apte à fournir un train binaire TB comprenant une concaténation de couples de sous-flux ou de fragments de sous-flux extraits de la pluralité de sous-flux.

Le train binaire TB est ensuite transporté via un réseau de télécommunications 30 jusqu'à un dispositif de désencapsulation DECAPS 40 selon l'invention apte à extraire les données utiles des couples correspondants aux N sous-flux et à les présenter aux files d'attente d'entrée FE₁ à FE_{N}, d'un dispositif de décodage DEC 50 qui seront distribuées par un séquenceur S aux K processeurs aptes à décoder en parallèle les données placées dans les files d'attente FE₁ à FEN selon les commandes du séquenceur S, par exemple en fonction de leur état de charge. On notera que les données correspondant à un couple pourront avantageusement être placées dans deux files d'attentes, de telle sorte qu'un premier processeur obtienne les données correspondant au premier élément du couple dans une première file et un deuxième processeur les données utiles corespondant au deuxième élément du couple dans une deuxième file d'attente.

Une image décodée DIMG est ensuite obtenue et affichée à l'aide d'un dispositif d'affichage 60.

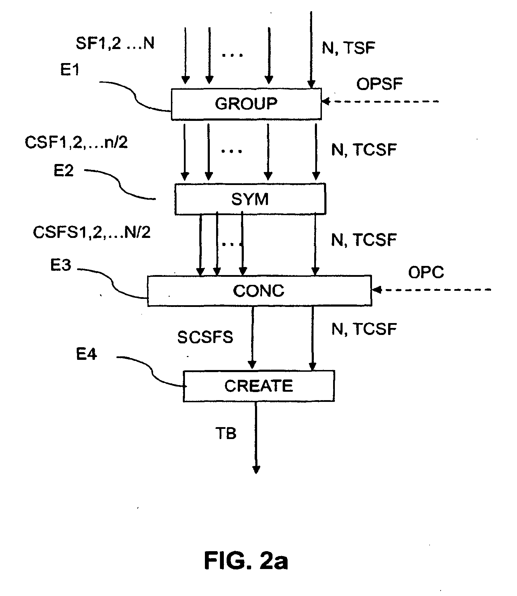

Le procédé d'encapsulation selon l'invention va maintenant être décrit en relation avec la **Figure 2a****.** Un tel procédé reçoit en entrée une pluralité de sous-flux de données SF1, SF2,..., SFN codées par un encodeur.

Selon une première étape E1, les sous-flux SF1 à SFN sont regroupés en couples de sous-flux CSF selon un ordre de parcours itératif prédéterminé OPSF des sous-flux. De façon avantageuse, cet ordre de parcours respecte des contraintes d'ordonnancement des sous-flux relatives à des dépendances pour le décodage. Le nombre N de sous-flux et les tailles des sous-flux sont des informations obtenues du dispositif d'encodage de l'image ou série d'images en la pluralité de sous-flux.

Selon une deuxième étape E2, les données codées du deuxième sous-flux de chaque couple sont inversées. A l'issue de cette étape, les données ainsi inversées doivent être lues en partant de la fin de la sous-séquence formée par ce couple de sous flux, dit couple de sous flux symétriques CSFS. A la fin de cette opération, une pluralité de couples de sous-flux symétriques est obtenue.

Selon une étape E3, les couples de sous-flux symétriques sont concaténés selon un ordre de parcours itératif prédéterminé des couples OPC, pour former une séquence de couples de sous-flux symétriques SCSFS. Avantageusement, l'ordre de parcours est le même que celui du parcours des sous-flux.

Selon une étape E4, un train binaire TB est créé en concaténant des métadonnées comprenant le nombre de sous-flux N, les tailles des couples de sous-flux obtenus et la séquence de sous-flux symétriques SCSFS.

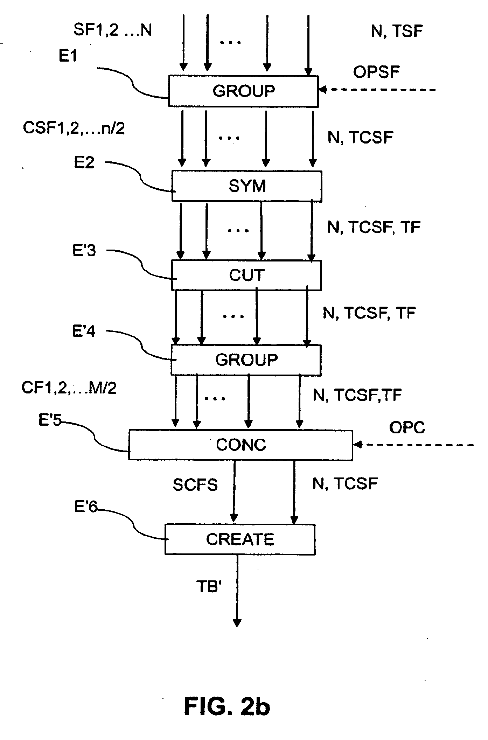

Le procédé d'encapsulation selon un mode de réalisation de l'invention va maintenant être décrit en relation avec la **Figure 2****b.** Les étapes E1 et E2 sont inchangées. En E'3, les sous-flux des couples de sous-flux symétriques CSFS sont découpés en fragments de taille fixe. La taille TF d'un fragment est une métadonnée supplémentaire nécessaire à la mise en oeuvre de l'invention. En E'4, les fragments obtenus pour chaque couple de sous-flux symétriques sont regroupés en prélevant un fragment dans le premier sous-flux et un fragment dans le deuxième sous-flux. Pour chaque sous-flux du couple considéré, l'ordre de lecture est respecté, à savoir un ordre de lecture usuel de gauche à droite pour le premier sous-flux et un ordre de lecture inverse pour le deuxième. A l'issue de cette étape, des couples de fragments symétriques CFS sont obtenus pour chaque couple de sous-flux symétrique CSFS.

En E'5, les couples de fragments symétriques sont concaténés selon un ordre de parcours des couples de sous-flux symétriques itératif prédéterminé pour former une séquence de couples de fragments symétriques SCFS.

En E'6, un train binaire TB' est créé en concaténant des métadonnées comprenant le nombre de sous-flux N, des informations relatives aux tailles des couples de sous-flux obtenus, optionnellement la taille TF d'un fragment et la séquence de fragments symétriques SCFS.

En variante, la taille d'un fragment peut être connue a priori des dispositifs d'encapsulation et désencapsulation aptes à mettre en oeuvre respectivement les procédés d'encapsulation et de désencapsulation selon l'invention.

Dans le contexte du standard H264, le train binaire créé par le procédé d'encapsulation selon l'invention peut avantageusement prendre la forme d'une NALU. Dans ce mode de réalisation, les métadonnées relatives au nombre de sous-flux transportés, au nombre de couples symétriques et à leurs tailles respectives peuvent être placés au niveau de la couche VCL (Video Coding Layer) en en-tête des NALUs contenant les données utiles de l'image.

En variante, le nombre de sous-flux de données peut également être défini dans une NALU de plus haut niveau, par exemple une NALU de type SPS.

Lors de la signalisation d'une taille d'un sous-flux de données, le nombre de bit utilisés peut être de longueur variable. Par exemple, connaissant la taille de la partie utile (payload) de la NALU, on peut définir le nombre de bits ou d"octets nécessaires pour représenter toute taille inférieure (i.e. IntSup(Log_2(taille)).

Le train binaire créé pourra ensuite être transformé en paquets de transport par exemple de type RTP (Real Time Protocol, en anglais) tel que décrit dans le document RFC 3984 par S. Wenger, intitulé "RTP Payload Format for H264 Video" et précédemment cité.

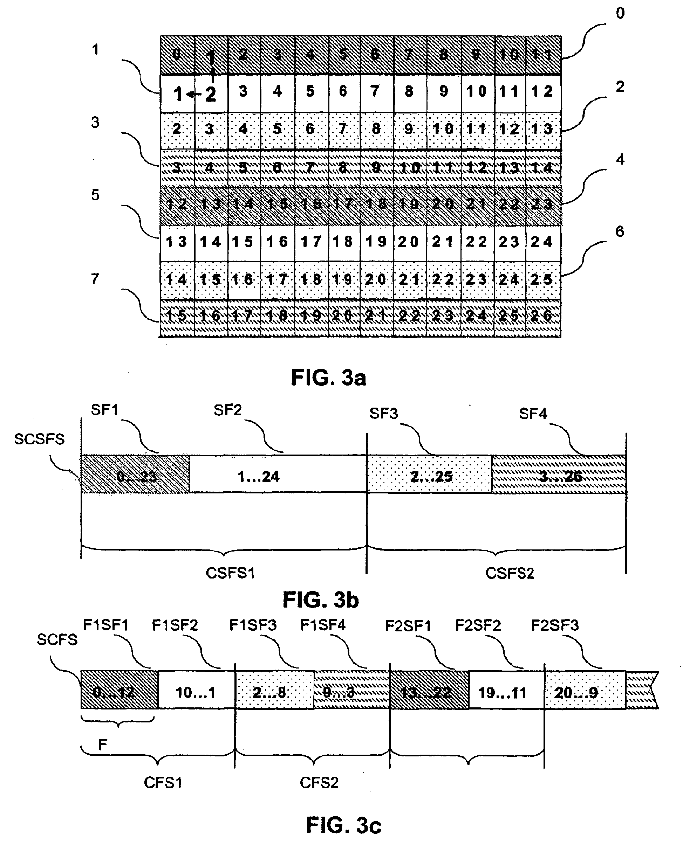

En relation avec la Figure 3a, on présente maintenant un exemple de sous-flux présentant des dépendances pour le décodage. On a représenté une image découpée en ensembles de blocs de taille fixe, appelées super-blocs. Les sous-séquences de symboles codés considérées ici sont représentatives de ces super-blocs. Elles ont été regroupées en 4 sous-flux et apparaissent grisées selon un des 4 motifs associés à ces sous-flux. On comprend que dans cet exemple tous les super-blocs d'une même ligne de l'image ont été regroupés dans un même sous-flux, par exemple le sous-flux 0 a été affecté à la ligne 0 en haut de l'image et à la ligne 4. Ainsi, les super-blocs numérotés de 0 à 11 de la ligne 0 et 12 à 23 de la ligne 4 forment le sous-flux 0.
Les dépendances entre super-blocs codés sont représentées à l'aide de numéros indiqués à l'intérieur des super-blocs. Par exemple, le super bloc numéroté 2 de la ligne 1 dépend des super blocs voisins numérotés 1. Il s'agit de ceux situés respectivement au-dessus de lui et à sa gauche. Ces super blocs voisins doivent nécessairement avoir été décodés avant que le décodage du super bloc numéroté 2 puisse commencer.

De telles dépendances sont par exemple issues d'une étape de codage entropique qui utilise, pour l'encodage du super bloc courant numéroté 2 de la ligne 1, des probabilités d'occurrence de symboles stockées pour les deux super blocs voisins numérotés 1. Lors du décodage du super bloc courant numéroté 2, le décodeur doit donc préalablement récupérer les probabilités stockées suite au décodage des deux super-blocs de la ligne 0. Il en résulte que le sous-flux 1 doit donc être décodé avec retard par rapport au sous-flux 0.

Plus précisément, si l'on considère la ligne 1, on peut voir qu'à partir du moment où les super-blocs 0 et 1 de la ligne 0 sont décodés, les blocs de la ligne 1 peuvent être décodés également. En effet, le bloc 2 de la ligne 1 a besoin des super-blocs 1 des lignes 0 et 1 décodées, et ainsi de suite.

On comprend donc que les différentes lignes de cette image peuvent être décodées en parallèle, en respectant la contrainte de dépendance, c'est-à-dire en commençant le décodage de la ligne 0 avant le décodage de la ligne 1, et ainsi de suite.

D'un point de vue temporel, si l'on considère que les numéros des blocs correspondent à l'instant auquel ils sont décodés, on peut donc voir qu'à l'instant t=4 par exemple, les super-blocs 4 des lignes 0, 1, 2 et 3 peuvent être décodés.

Les contraintes d'ordonnancement associées à de telles dépendances sont simples et s'appliquent de la même façon à tous les super-blocs de l'image, à l'exception de ceux de la première ligne et de la première colonne, pour lesquels un seul des deux voisinages est à considérer. Il en résulte que ces contraintes peuvent être traduites sous forme de règles simples, soit implicites, soit explicites et stockées dans une mémoire à laquelle le dispositif mettant en oeuvre le procédé selon l'invention peut accéder. Elles peuvent aussi être transportées dans le flux dans les NALUs de paramètres, par exemple de type SPS.

Lors de la mise en oeuvre de l'étape E4 de concaténation de la pluralité de couples symétriques CS(UFi,UFj), le procédé d'encapsulation selon l'invention consulte avantageusement les éventuelles règles RD relatives à l'ordonnancement des sous-flux et les applique pour obtenir la séquence SCS de couples symétriques.

En relation avec la **Figure 3b****,** on présente un cas d'encapsulation simple des sous-flux SF1 à SF4 de l'exemple de la Figure 3a. La formation des couples de sous-flux est faite en tenant compte des contraintes d'ordonnancement définies ci-dessus. Les sous-flux sont parcourus dans l'ordre des lignes de l'image (de haut en bas) et les sous-flux sont prélevés dans l'ordre des colonnes. Il en résulte que le premier couple est formé du sous-flux comprenant les lignes 0 et 4 et du sous-flux comprenant les lignes 1 et 5.

En relation avec la **Figure 3c****,** on considère maintenant le cas d'une encaspulation complexe selon laquelle les sous-flux sont découpés en fragments F de taille fixe. Comme dans l'exemple précédent, la séquence de couples est obtenue en parcourant les sous-flux SF1 à SF4 dans l'ordre de parcours des lignes et en prélevant itérativement les fragments selon l'ordre des colonnes. On constate que tous les fragments FiSFj, avec i et j entiers supérieurs ou égaux à 1, Fi étant le ième fragment du jème sous-flux, ne comprennent pas un nombre égal de super-blocs. Ceci est dû au fait que l'encodage d'un super-bloc nécessite une quantité variable de données codées en fonction de la partie d'image qu'il représente.

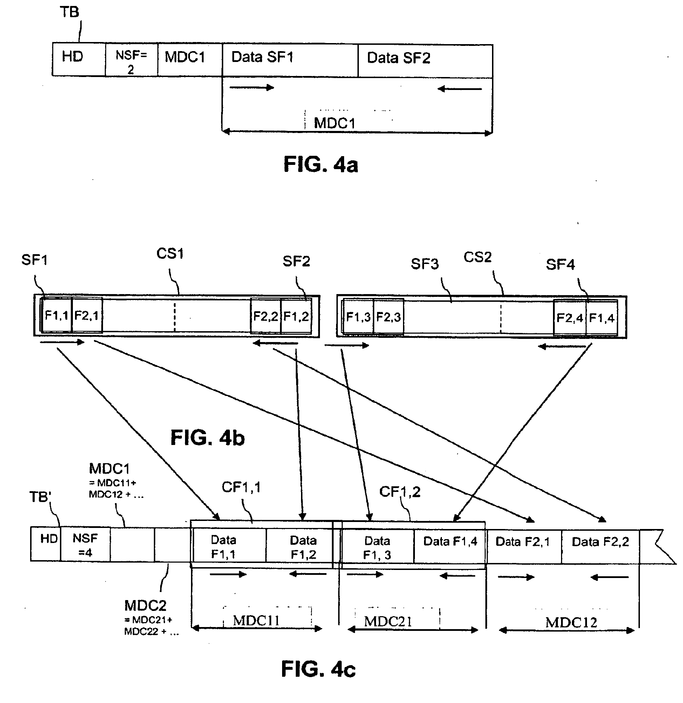

En relation avec la **Figure 4a****,** on présente plus généralement le format d'un train binaire TB obtenu à partir de deux sous-flux SF1 et SF2 par le procédé d'encapsulation selon l'invention. Le train binaire obtenu comprend donc un seul couple de sous-flux symétriques, constitué du premier sous-flux SF1 et du deuxième sous-flux SF2 inversé. Les flèches horizontales indiquent les sens de lecture des données utiles de chaque sous-flux. Le train binaire comprend aussi un en-tête HD comprenant des métadonnées, relatives par exemple à un type de données utiles transportées. Selon l'invention, le train binaire TB comprend en outre des métadonnées MDC relatives au nombre de sous-flux et à la taille des couples symétriques transportés. L'information relative au nombre de sous-flux permet notamment au décodeur d'adapter ses capacités de décodage au train binaire reçu. On notera que ce nombre de sous-flux peut-être identique pour toutes les images ou variables en fonction du type d'image I, P ou B.

En relation avec les Figures **4b et 4c****,** on présente un exemple d'encapsulation complexe de 4 sous-flux SF1 à SF4 en un train binaire TB'. Les fragments de sous-flux sont de taille fixe, par exemple égale à 100 octets. La Figure 4b présente deux couples de sous-flux symétriques CS1 et CS2, formés à partir des 4 sous-flux SF1 à SF4 selon l'invention. Les flèches tracées entre les Figures 4b et 4c illustrent l'étape de regroupement des fragments issus des deux couples de sous-flux CS1 et CS2 en couples de fragments CFi et leur concaténation dans une séquence SCF selon un ordre de parcours itératif prédéterminé des couples de sous-flux. De façon avantageuse, cet ordre de parcours respecte l'ordre de parcours des sous-flux utilisés pour regrouper la pluralité de sous-flux en couples.

Autrement dit, les couples de sous-flux CS1 et CS2 sont parcourus selon l'ordre de lecture usuel pour leur premier sous-flux et l'ordre de lecture inverse pour leur deuxième sous-flux. Pour le couple CS1 , le fragment F1,1 du sous-flux SF1 est regroupé avec le fragment F1, 2 du sous-flux SF2 dans un couple de fragments CF1,1, puis le fragment F1,3 du sous-flux SF3 est regroupé avec le fragment F1, 4 du sous-flux SF4 dans un couple de fragments CF1,2, et ainsi de suite.

En ce qui concerne la signalisation d'une encapsulation complexe, c'est-à-dire comprenant des fragments de sous-flux de données, différents modes de signalisation sont possibles:
- La taille de chaque couple de sous-flux entiers est signalée une seule fois au début du train binaire. En comptant le nombre de bits reçus pour chaque sous-flux, le décodeur peut ainsi identifier aisément le dernier fragment d'un sous-flux ou d'un couple de sous-flux En relation avec la figure 4a, par exemple, MDC1 indique la taille du couple 1 (couple 1 = SF1, SF2) MDC2 celle du couple 2 (couple 2 = SF3 , SF4)
- Le nombre de fragments de chaque sous-flux ou couples de sous-flux ainsi que la taille du dernier fragment sont signalés une seule fois au début du train binaire.
- Un bit associé à chaque fragment indiquant si ce fragment est le dernier pour le sous-flux, si c'est le cas la taille du dernier fragment est signalée.

La taille d'un sous-flux est indiquée en nombre d'octets.

### Transport du train binaire créé :

Les données des fragments ou sous-flux constituant le train binaire sont envoyées dans des paquets selon le mécanisme de transport retenu, par exemple RTP ou MPEG-2 TS.

Les métadonnées supplémentaires associées aux couples de sous-flux selon l'invention seront placées dans un pseudo en-tête. Selon le protocole RTP par exemple, ce pseudo en-tête encapsule traditionnellement les données de la couche NALU/VCL accessibles au niveau du transport.

Le mode d'encapsulation (simple ou complexe) devra être signalé par les mécanismes de signalisation habituels du format de transport (par exemple SDP pour RTP), et ne pourra pas changer au cours d'une session.

### Désencapsulation du train binaire et décodage parallèle :

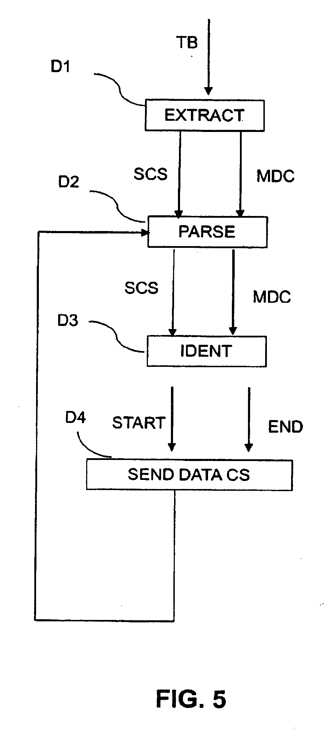

Le procédé de désencapsulation selon l'invention va maintenant être décrit en relation avec la **Figure 5****.** Sur réception d'un train binaire TB créé par un procédé d'encapsulation d'une pluralité SF1 à SFN de flux de données codées selon l'invention, le procédé de désencapsulation met en oeuvre une étape D1 d'analyse du train binaire TB, au cours de laquelle des informations ou métadonnées MDC relatives à un nombre de sous-flux et aux tailles des couples de sous-flux sont extraites.

Le nombre de couples est déduit du nombre de sous-flux et est égal à la moitié du nombre de sous-flux si ce nombre est pair ou à la moitié du nombre de sous-flux augmentée de un si ce nombre est impair.

Une information relative au mode d'encapsulation utilisé appartenant à un groupe comprenant au moins un mode d'encapsulation simple et un mode d'encapsulation complexe, est également extraite.

Le procédé de désencapsulation selon l'invention met ensuite en oeuvre une étape D2 de parcours des données utiles du train binaire reçu, et tant que toutes les données utiles n'ont pas été parcourues, une étape D3 d'identification des positions de début et de fin des couples symétriques reçus est mise en oeuvre. Les données utiles situées entre les positions de début et de fin identifiées sont envoyées en D4 à un dispositif de décodage apte à commander à deux processeurs distincts le décodage parallèle des données utiles relatives aux deux éléments du couple symétrique considéré, que ce soit un sous-flux entier selon un premier mode de réalisation de l'invention (mode d'encapsulation simple) ou un fragment de sous-flux (mode d'encapsulation complexe).

### Cas d'un mode d'encapsulation simple :

S'il s'agit d'un mode d'encapsulation simple, les couples reçus sont des couples de sous-flux.

Les positions de début et de fin des données utiles relatives à chaque couple reçu sont détectées dans le train binaire à l'aide des informations relatives aux tailles des couples de sous-flux reçues comme métadonnées.

### Cas d'un mode d'encapsulation complexe :

Dans ce mode, les sous-flux ont été découpés en fragments de sous-flux de taille fixe. Ceci permet au terminal de commencer à décoder dès qu'une partie du train binaire a été reçue. Cette taille fixe est supposée connue du dispositif apte à mettre en oeuvre le procédé de désencapsulation selon l'invention. En variante, elle peut être transmise dans un paquet de données de la séquence de type SPS ou bien dans un en-tête de la signalisation du protocole de transport.

En D3, la partie utile du train binaire est parcourue et les positions de début et de fin de chaque couple de fragments de sous-flux sont identifiées à l'aide des métadonnées extraites. Partant d'une première position de début située au début des données utiles, la première position de fin est située à une distance égale à deux fois la taille fixe d'un fragment.

Pour la suite, l'algorithme suivant est appliqué :
Soit M le nombre de couples de sous-flux. La taille totale SCi de chaque couple de sous-flux est connue. Chaque sous-flux comporte un nombre de fragments variable. Chaque fragment est de taille K constante, sauf (éventuellement) le dernier fragment, un couple de fragments est donc de taille 2*K constante, sauf (éventuellement) le dernier couple de fragments.

Le décodeur peut extraire les fragments selon l'algorithme suivant :
pour chaque couple de sous-flux, la taille lue TLi pour le couple i ayant été préalablement initialisée à zéro.

Si la taille totale SCi du couple de sous-flux est atteinte

Alors fin pour ce couple de sous-flux

Sinon

S'il reste plus de 2.K octets à lire

Alors lecture des 2.K octets et extraction des positions de début et de fin

Sinon lecture des octets restants
incrémenter la taille lue TLi de 2K pour ce couple de sous-flux
transmettre les données utiles correspondant au couple aux files d'attente du dispositif de décodage.

Selon une étape D4, les données utiles pour un couple CS sont ensuite envoyées au fur et à mesure à un dispositif de décodage apte à faire décoder en parallèle respectivement le premier et le deuxième fragments F1 et F2 des sous-flux SF1 et SF2 du couple CS par deux processeurs distincts. Les données du deuxième fragment F2 sont lues par le processeur concerné en partant de la fin des données. On considère que les deux processeurs sont capables de détecter la fin des données à décoder pour leurs fragments respectifs, par exemple en détectant un dernier bloc d'une sous-séquence ou d'une image ou encore parce que la taille K du fragment des données binaires décodées est atteinte. Chaque processus effectue le décodage des données qu'il a reçues en parallèle des autres processus en tenant compte des contraintes de synchronisation s'il y a lieu.

Les étapes D2, D3 et D4 sont répétées tant que des données utiles du train binaire sont reçues. Les données extraites de chaque couple de fragments de sous-flux en D3 sont extraites selon un parcours itératif prédéterminé des couples de sous-flux.

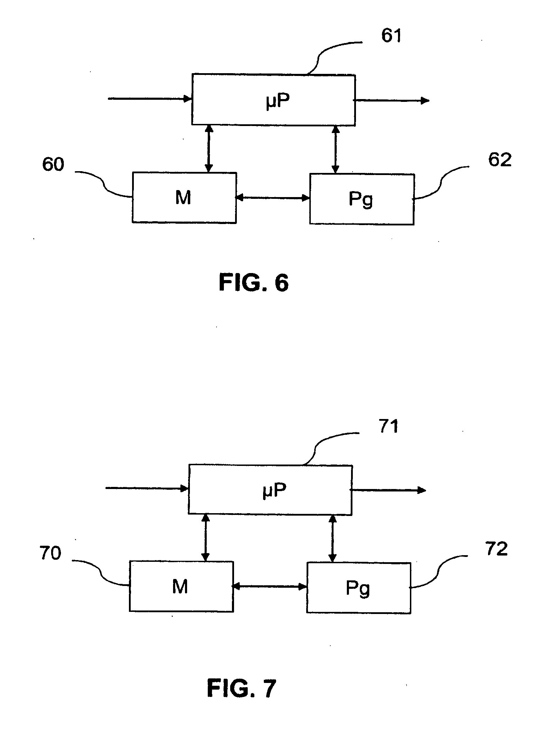

On présente finalement, en relation avec les **Figures 6 et 7****,** la structure simplifiée d'un dispositif d'encapsulation et d'un dispositif de désencapsulation selon les modes de réalisation décrits ci-dessus.

Comme illustré en **Figure 6****,** un tel dispositif d'encapsulation comprend une mémoire 61 comprenant une mémoire tampon, une unité de traitement 62, équipée par exemple d'un microprocesseur µP, et pilotée par le programme d'ordinateur 63, mettant en oeuvre le procédé d'encapsulation selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une pluralité de sous-flux de données codées et des métadonnées telles que les tailles des couples symétriques et le nombre de sous-flux transportés. Le microprocesseur de l'unité de traitement 62 met en oeuvre les étapes du procédé d'encapsulation décrit précédemment, selon les instructions du programme d'ordinateur 63. Pour cela, le dispositif d'encapsulation comprend, outre la mémoire tampon 61, des moyens de groupement des sous-flux de données en couples de sous-flux selon un ordre de parcours itératif prédéterminé de ladite pluralité de sous-flux, des moyens d'obtention d'un couple symétrique, à partir d'un couple, par inversion d'un ordre des données composant le deuxième sous-flux du couple, des moyens de concaténation des couples selon un ordre de parcours itératif prédéterminé des couple de sous-flux, obtenus en une séquence; et des moyens de création du train binaire aptes à encapsuler ladite séquence et des informations relatives à un nombre de sous-flux et aux tailles des couples symétriques. L'unité de traitement 62 transmet donc, à destination d'au moins un dispositif de désencapsulation, un train binaire encapsulant la pluralité de sous-flux de données codées.

Comme illustré en figure 7, un tel dispositif de désencapsulation comprend quant à lui une mémoire 71 comprenant une mémoire tampon, une unité de traitement 72, équipée par exemple d'un microprocesseur µP, et pilotée par le programme d'ordinateur 73, mettant en oeuvre le procédé de désencapsulation selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un train binaire représentatif d'au moins une image codée. Le microprocesseur de l'unité de traitement 72 met en oeuvre les étapes du procédé de désencapsulation décrit précédemment, selon les instructions du programme d'ordinateur 73. Pour cela, le dispositif de désencapsulation comprend, outre la mémoire tampon 71, des moyens d'extraction des informations relatives à un nombre de sous-flux et à des tailles de couples de sosu-flux, des moyens de parcours des données utiles du train binaire reçu, aptes à mettre en oeuvre, tant que le parcours n'est pas achevé, des moyens d'identification d'une position de début et d'une position de fin d'un couple à partir desdites informations extraites et des moyens d'envoi des données utiles relatives au couple situé entre lesdites positions de début et de fin à un dispositif de décodage apte à faire effectuer par deux processeurs distincts un décodage en parallèle des données utiles relatives aux deux éléments dudit couple, à partir desdites positions, le premier dans un sens usuel et le second dans un sens inverse de lecture des données.

## Revendications

1. Procédé d'encapsulation d'une pluralité de sous-flux de données codées dans un train binaire, un sous-flux de données codées étant obtenu par codage entropique d'une sous-séquence de symboles représentative d'une image ou d'une série d'images, ledit procédé comprenant une étape de création d'un train binaire encapsulant ladite pluralité de sous-flux, ledit procédé étant **caractérisé en ce qu'**il comprend les étapes suivantes :
- parcours de ladite pluralité de sous-flux selon un ordre de parcours prédéterminé de l'image,
- groupement des sous-flux de données parcourus en couples de sous-flux selon un ordonnancement prédéterminé desdits sous-flux ;
- à partir d'un couple, obtention d'un couple symétrique par inversion d'un ordre des données composant le deuxième sous-flux du couple;
- concaténation des couples obtenus en une séquence; et **en ce que**
- l'étape de création du train binaire comprend l'encapsulation de ladite séquence et d'informations relatives à un nombre de sous-flux et aux tailles des couples de sous-flux symétriques.

2. Procédé d'encapsulation d'une pluralité de sous-flux de données codées dans un train binaire selon la revendication 1, **caractérisé en ce qu'**il comprend les étapes suivantes :
Pour chaque couple de sous-flux symétriques, ledit couple comprenant un premier et un deuxième sous-flux :
- découpage du premier et du deuxième sous-flux en fragments de taille fixe;
- groupement des fragments obtenus dans un couple de sous-flux symétriques en couples de fragments symétriques en prélevant, pour chaque couple un premier fragment dans le premier sous-flux du couple à partir du début des données relatives au couple de sous-flux, selon un sens usuel de lecture, et un deuxième fragment dans le deuxième sous-flux du couple à partir de la fin des données relatives au couple de sous-flux, selon un sens inverse de lecture; et **en ce que**
- l'étape de concaténation des couples en une séquence de couples symétriques s'applique aux couples de fragments obtenus et consiste à prélever les couples de fragments issus des couples de sous-flux selon un ordre de parcours itératif prédéterminé des couples de sous-flux;
- l'étape de création du train binaire comprend l'ajout d'une information relative à la taille fixe des fragments.

3. Procédé d'encapsulation d'une pluralité de sous-flux de données selon les revendications 1 ou 2, **caractérisé en ce que** les informations relatives aux tailles des couples de sous-flux symétriques comprennent les tailles de couples de sous-flux symétriques.

4. Procédé d'encapsulation d'une pluralité de sous-flux de données selon la revendication 2, **caractérisé en ce que** les informations relatives aux tailles des couples de sous-flux symétriques comprennent un nombre de fragments par sous-flux et la taille des couples de fragments comprenant un dernier fragment d'un des sous-flux d'un couple de sous-flux symétriques.

5. Procédé d'encapsulation d'une pluralité de sous-flux de données selon la revendication 1 ou 2, **caractérisé en ce que** l'étape de création du train binaire comprend l'encapsulation d'une information relative à un mode d'encapsulation de la pluralité de sous-flux.

6. Dispositif d'encapsulation d'une pluralité de sous-flux de données codées dans un train binaire, un sous-flux de données codées étant obtenu par codage entropique d'une sous-séquence de symboles représentative d'une image ou d'une série d'images, ledit dispositif comprenant des moyens de création d'un train binaire encapsulant ladite pluralité de sous-flux, ledit dispositif étant **caractérisé en ce qu'**il comprend des moyens aptes à exécuter les étapes suivantes :
- parcours de ladite pluralité de sous-flux selon un ordre de parcours prédéterminé de l'image,
- groupement des sous-flux de données parcourus en couples de sous-flux selon un ordonnancement prédéterminé desdits sous-flux ;
- à partir d'un couple, obtention d'un couple symétrique par inversion d'un ordre des données composant le deuxième sous-flux du couple;
- concaténation des couples obtenus en une séquence; et **en ce que**
- les moyens de création du train binaire comprennent l'encapsulation de ladite séquence et d'informations relatives à un nombre de sous-flux et aux tailles des couples de sous-flux symétriques.

7. Dispositif d'encapsulation selon la revendication 6, **caractérisé en ce qu'**il comprend en outre des moyens aptes à exécuter les étapes suivantes :
pour chaque couple de sous-flux symétriques, ledit couple comprenant un premier et un deuxième sous-flux :
- découpage du premier et du deuxième sous-flux en fragments de taille fixe;
- groupement des fragments obtenus dans un couple de sous-flux symétriques en couples de fragments symétriques en prélevant, pour chaque couple un premier fragment dans le premier sous-flux du couple à partir du début des données relatives au couple de sous-flux, selon un sens usuel de lecture, et un deuxième fragment dans le deuxième sous-flux du couple à partir de la fin des données relatives au couple de sous-flux symétrique, selon un sens inverse de lecture; et **en ce que**
- l'étape de concaténation des couples en une séquence de couples symétriques s'applique aux couples de fragments obtenus; et
- l'étape de création du train binaire comprend l'ajout d'une information relative à la taille fixe des fragments.

8. Procédé de désencapsulation d'un train binaire comprenant une pluralité de sous-flux de données codées, un sous-flux de données étant obtenu par codage entropique d'une sous-séquence de symboles représentative d'une image ou d'une série d'images, ledit train binaire étant obtenu par le procédé d'encapsulation selon la revendication 1,
**caractérisé en ce que** ledit procédé de désencapsulation comprend les étapes suivantes :
- extraction des informations relatives à un nombre de sous-flux et à des tailles de couples de sous-flux;
- parcours des données utiles du train binaire reçu, au cours duquel les étapes suivantes sont mises en oeuvre :
- tant que le parcours n'est pas achevé :
- identification d'une position de début et d'une position de fin d'un couple à partir desdites informations extraites;
- envoi des données utiles relatives au couple, situées entre lesdites positions de début et de fin, à un dispositif de décodage apte à faire effectuer par deux processeurs distincts un décodage en parallèle des données utiles relatives aux deux éléments dudit couple, à partir desdites positions, le premier dans un sens usuel et le second dans un sens inverse de lecture des données.

9. Procédé de désencapsulation d'un train binaire selon la revendication 8, **caractérisé en ce que**, ledit train binaire ayant été créé par le procédé d'encapsulation selon la revendication 2, l'étape d'extraction comprend en outre l'extraction d'informations relatives à la taille fixe d'un fragment et les étapes d'identification et d'envoi s'appliquent aux couples de fragments symétriques.

10. Dispositif de désencapsulation d'un train binaire comprenant une pluralité de sous-flux de données codées, un sous-flux de données étant obtenu par codage entropique d'une sous-séquence de symboles représentative d'une image ou d'une série d'images, ledit train binaire étant obtenu par le procédé d'encapsulation selon la revendication 1, ledit dispositif est **caractérisé en ce qu'**il comprend des moyens aptes à exécuter les étapes suivantes :
- extraction des informations relatives à un nombre de sous-flux et à des tailles de couples de sous-flux;
- parcours des données utiles du train binaire reçu, au cours duquel les étapes suivantes sont mises en oeuvre :
- tant que le parcours n'est pas achevé :
- identification d'une position de début et d'une position de fin d'un couple symétrique à partir desdites informations extraites;
- envoi des données utiles relatives au couple situé entre lesdites positions de début et de fin à un dispositif de décodage apte à faire effectuer par deux processeurs distincts un décodage en parallèle des données utiles relatives aux deux éléments dudit couple, à partir desdites positions, le premier dans un sens usuel et le second dans un sens inverse de lecture des données.

11. Dispositif de désencapsulation d'un train binaire selon la revendication 10, ledit train binaire ayant été créé par le procédé d'encapsulation selon la revendication 2, **caractérisé en ce que** les moyens d'extraction sont aptes à extraire en outre des informations relatives à la taille d'un fragment et les moyens d'identification s'appliquent aux couples de fragments symétriques.

12. Dispositif de décodage d'une pluralité de sous-flux de données codées, un sous-flux de données étant obtenu par codage entropique d'une sous-séquence de symboles représentative d'une image ou d'une série d'images, **caractérisé en ce qu'**il comprend des moyens de réception de données utiles relatives à des couples symétriques obtenus à l'aide du procédé de désencapsulation d'un train binaire selon les revendications 8 et 9 et des moyens de commande de décodage des deux éléments d'un couple reçu à des processeurs distincts.

13. Signal portant un train binaire obtenu par le procédé selon la revendication 1.

14. Programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'encapsulation d'une pluralité de sous-flux de données codées selon la revendication 1.

15. Programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de désencapsulation d'une pluralité de sous-flux de données codées selon la revendication 8.

## Patentansprüche

1. Verfahren zum Einkapseln mehrerer Teilflüsse codierter Daten in einen binären Zug, wobei ein Teilfluss codierter Daten durch entropische Codierung einer Teilfolge von Symbolen, die ein Bild oder eine Reihe von Bildern repräsentieren, erhalten wird, wobei das Verfahren einen Schritt des Erzeugens eines binären Zugs, der die mehreren Teilflüsse einkapselt, umfasst, wobei das Verfahren **dadurch gekennzeichnet ist, dass** es die folgenden Schritte umfasst:
- Durchlaufen der mehreren Teilflüsse in einer vorgegebenen Durchlaufreihenfolge des Bildes,
- Gruppieren der durchlaufenen Teilflüsse von Daten in Teilflusspaare gemäß einer vorgegebenen Organisation der Teilflüsse;
- anhand eines Paars Erhalten eines symmetrischen Paars durch Umkehrung einer Reihenfolge der Daten, die den zweiten Teilfluss des Paars bilden;
- Verknüpfen der erhaltenen Paare zu einer Folge; und dass
- der Schritt des Erzeugens des binären Zugs das Einkapseln der Folge und von Informationen bezüglich einer Anzahl von Teilflüssen und der Größen der symmetrischen Paare von Teilflüssen umfasst.

2. Verfahren zum Einkapseln mehrerer Teilflüsse codierter Daten in einen binären Zug nach Anspruch 1, **dadurch gekennzeichnet, dass** es die folgenden Schritte umfasst:
für jedes Paar symmetrischer Teilflüsse, wobei das Paar einen ersten und einen zweiten Teilfluss enthält:
- Zerlegen des ersten und des zweiten Teilflusses in Fragmente mit fester Größe;
- Gruppieren der erhaltenen Fragmente in einem Paar symmetrischer Teilflüsse in Paare symmetrischer Fragmente, indem für jedes Paar ein erstes Fragment in dem ersten Teilfluss des Paars ausgehend von dem Beginn der Daten relativ zu dem Paar von Teilflüssen in einer üblichen Leserichtung abgetastet wird und ein zweites Fragment in dem zweiten Teilfluss des Paars ausgehend von dem Ende der Daten relativ zu dem Teilflusspaar in einer umgekehrten Leserichtung abgetastet wird; und dass
- der Schritt des Verknüpfens von Paaren zu einer Folge symmetrischer Paare auf erhaltene Paare von Fragmenten angewendet wird und darin besteht, die Paare von Fragmenten, die von Paaren von Teilflüssen stammen, in einer vorgegebenen iterativen Durchlaufreihenfolge der Paare von Teilflüssen abzutasten; und
- der Schritt des Erzeugens des binären Zugs das Hinzufügen einer Information bezüglich der festen Größe der Fragmente enthält.

3. Verfahren zum Einkapseln mehrerer Teilflüsse von Daten nach Anspruch 1 oder 2, **dadurch gekennzeichnet, dass** die Informationen bezüglich der Größen von Paaren symmetrischer Teilflüsse die Größen von Paaren symmetrischer Teilflüsse enthalten.

4. Verfahren zum Einkapseln mehrerer Teilflüsse von Daten nach Anspruch 2, **dadurch gekennzeichnet, dass** die Informationen bezüglich der Größe von Paaren symmetrischer Teilflüsse eine Anzahl von Fragmenten pro Teilfluss und die Größe der Paare von Fragmenten, die ein letztes Fragment eines der Teilflüsse eines Paars symmetrischer Teilflüsse enthalten, umfassen.

5. Verfahren zum Einkapseln mehrerer Teilflüsse von Daten nach Anspruch 1 oder 2, **dadurch gekennzeichnet, dass** der Schritt des Erzeugens des binären Zugs das Einkapseln einer Information bezüglich einer Einkapselungsart der mehreren Teilflüsse enthält.

6. Vorrichtung zum Einkapseln mehrerer Teilflüsse codierter Daten in einem binären Zug, wobei ein Teilfluss codierter Daten durch entropisches Codieren einer Teilfolge von Symbolen, die ein Bild oder eine Reihe von Bildern repräsentieren, erhalten wird, wobei die Vorrichtung Mittel zum Erzeugen eines binären Zugs, der die mehreren Teilflüsse einkapselt, enthält, wobei die Vorrichtung **dadurch gekennzeichnet ist, dass** sie Mittel umfasst, die dafür ausgelegt sind, die folgenden Schritte auszuführen:
- Durchlaufen der mehreren Teilflüsse in einer vorgegebenen Durchlaufreihenfolge des Bildes,
- Gruppieren der durchlaufenen Teilflüsse von Daten zu Paaren von Teilflüssen gemäß einer vorgegebenen Organisation der Teilflüsse;
- ausgehend von einem Paar Erhalten eines symmetrischen Paars durch Umkehren einer Reihenfolge der Daten, die den zweiten Teilfluss des Paars bilden;
- Verknüpfen der erhaltenen Paare zu einer Folge; und dass
- die Mittel zum Erzeugen des binären Zugs das Einkapseln der Folge und Informationen bezüglich einer Anzahl von Teilflüssen und der Größen der Paare symmetrischer Teilflüsse umfassen.

7. Einkapselungsvorrichtung nach Anspruch 6, **dadurch gekennzeichnet, dass** sie außerdem Mittel umfasst, die dafür ausgelegt sind, die folgenden Schritte auszuführen:
für jedes Paar symmetrischer Teilflüsse, wobei das Paar einen ersten und einen zweiten Teilfluss enthält:
- Zerlegen des ersten und des zweiten Teilflusses in Fragmente mit fester Größe;
- Gruppieren der erhaltenen Fragmente in einem Paar symmetrischer Teilflüsse in Paare symmetrischer Fragmente, indem für jedes Paar ein erstes Fragment in dem ersten Teilfluss des Paars ausgehend von dem Beginn der Daten bezüglich des Paars von Teilflüssen in einer üblichen Leserichtung abgetastet wird und ein zweites Fragment in dem zweiten Teilfluss des Paars ausgehend von dem Ende der Daten bezüglich des symmetrischen Paars von Teilflüssen in einer umgekehrten Leserichtung abgetastet wird; und dass
- der Schritt des Verknüpfens der Paare zu einer Folge symmetrischer Paare auf Paare erhaltener Fragmente angewendet wird; und
- der Schritt des Erzeugens des binären Zugs die Hinzufügung einer Information bezüglich der festen Größe der Fragmente umfasst.

8. Verfahren zum Entkapseln eines binären Zugs, der mehrere Teilflüsse codierter Daten enthält, wobei ein Teilfluss von Daten durch entropisches Codieren einer Teilfolge von Symbolen, die ein Bild oder eine Reihe von Bildern repräsentieren, erhalten wird, wobei der binäre Zug durch das Einkapselungsverfahren nach Anspruch 1 erhalten wird,
**dadurch gekennzeichnet, dass** das Entkapselungsverfahren die folgenden Schritte umfasst:
- Extrahieren von Informationen bezüglich einer Anzahl von Teilflüssen und der Größen von Paaren von Teilflüssen;
- Durchlaufen der Nutzdaten des empfangenen binären Zugs, im Verlauf dessen die folgenden Schritte ausgeführt werden:
- solange der Durchlauf nicht beendet ist:
- Identifizieren einer Anfangsposition und einer Endposition eines Paars anhand der extrahierten Informationen;
- Schicken der Nutzdaten bezüglich des Paars, die sich zwischen der Anfangs- und der Endposition befinden, zu einer Decodierungsvorrichtung, die durch zwei verschiedene Prozessoren eine parallele Decodierung der Nutzdaten bezüglich der zwei Elemente des Paars ausgehend von den Positionen, der Erste in einer üblichen Datenleserichtung und der Zweite in einer umgekehrten Richtung, ausführen kann.

9. Verfahren zum Entkapseln eines binären Zugs nach Anspruch 8, **dadurch gekennzeichnet, dass** dann, wenn der binäre Zug durch das Einkapselungsverfahren nach Anspruch 2 erzeugt worden ist, der Extraktionsschritt außerdem das Extrahieren von Informationen bezüglich der festen Größe eines Fragments umfasst und die Schritte des Identifizierens und Schickens auf Paare symmetrischer Fragmente angewendet werden.

10. Vorrichtung zum Entkapseln eines binären Zugs, der mehrere Teilflüsse codierter Daten enthält, wobei ein Teilfluss von Daten durch entropisches Codieren einer Teilfolge von Symbolen, die ein Bild oder eine Reihe von Bildern repräsentieren, erhalten wird, wobei der binäre Zug durch das Einkapselungsverfahren nach Anspruch 1 erhalten wird, wobei die Vorrichtung **dadurch gekennzeichnet ist, dass** sie Mittel umfasst, die dafür ausgelegt sind, die folgenden Schritte auszuführen:
- Extrahieren von Informationen bezüglich einer Anzahl von Teilflüssen und der Größen von Paaren von Teilflüssen;
- Durchlaufen der Nutzdaten des empfangenen binären Zugs, im Verlauf dessen die folgenden Schritte ausgeführt werden:
- solange der Durchlauf nicht beendet ist:
- Identifizieren einer Anfangsposition und einer Endposition eines symmetrischen Paars anhand der extrahierten Informationen;
- Schicken der Nutzdaten bezüglich des Paars, das sich zwischen der Anfangs- und der Endposition befindet, zu einer Decodierungsvorrichtung, die durch zwei verschiedene Prozessoren eine parallele Decodierung der Nutzdaten bezüglich der zwei Elemente des Paars ausgehend von den Positionen, der Erste in einer üblichen Datenleserichtung und der Zweite in einer umgekehrten Richtung, ausführen kann.

11. Vorrichtung zum Entkapseln eines binären Zugs nach Anspruch 10, wobei der binäre Zug durch das Einkapselungsverfahren nach Anspruch 2 erzeugt worden ist, **dadurch gekennzeichnet, dass** die Extraktionsmittel dafür ausgelegt sind, außerdem Informationen bezüglich der Größe eines Fragments zu extrahieren, und die Identifizierungsmittel auf Paare symmetrischer Fragmente angewendet werden.

12. Vorrichtung zum Decodieren mehrerer Teilflüsse codierter Daten, wobei ein Teilfluss von Daten durch entropisches Codieren einer Teilfolge von Symbolen, die ein Bild oder eine Reihe von Bildern repräsentieren, erhalten wird, **dadurch gekennzeichnet, dass** sie Mittel zum Empfangen von Nutzdaten bezüglich der symmetrischen Paare, die mit Hilfe des Verfahrens zum Entkapseln eines binären Zugs nach einem der Ansprüche 8 und 9 erhalten werden, und Mittel zum Steuern der Decodierung der zwei Elemente eines empfangenen Paars mit verschiedenen Prozessoren umfassen.

13. Signal, das einen binären Zug führt, der durch das Verfahren nach Anspruch 1 erhalten wird.

14. Computerprogramm, das von einem Kommunikationsnetz fernladbar ist und/oder auf einem computerlesbaren Träger gespeichert ist und/oder von einem Mikroprozessor ausführbar ist, **dadurch gekennzeichnet, dass** es Programmcodebefehle für die Ausführung des Verfahrens zum Einkapseln mehrerer Teilflüsse codierter Daten nach Anspruch 1 enthält.

15. Computerprogramm, das von einem Kommunikationsnetz fernladbar ist und/oder auf einem computerlesbaren Träger gespeichert ist und/oder von einem Mikroprozessor ausführbar ist, **dadurch gekennzeichnet, dass** es Programmcodebefehle für die Ausführung des Verfahrens zum Entkapseln mehrerer Teilflüsse codierter Daten nach Anspruch 8 enthält.

## Claims

1. Method for encapsulating a plurality of substreams of data coded in a binary train, a substream of coded data being obtained by entropy coding of a sub-sequence of symbols which is representative of an image or of a series of images, said method comprising a step of creating a binary train encapsulating said plurality of substreams, said method being **characterized in that** it comprises the following steps:
- scanning of said plurality of substreams according to a predetermined order of scanning of the image;
- grouping of the scanned substreams of data into pairs of substreams according to a predetermined scheduling of said substreams;
- on the basis of a pair, obtaining of a symmetric pair by reversal of an order of the data making up the second substream of the pair;
- concatenation of the pairs obtained into a sequence; and **in that**
- the step of creating the binary train comprises the encapsulation of said sequence and of information items relating to a number of substreams and to the sizes of the pairs of symmetric substreams.

2. Method for encapsulating a plurality of substreams of data coded in a binary train according to Claim 1, **characterized in that** it comprises the following steps: For each pair of symmetric substreams, said pair comprising a first and a second substream:
- splitting of the first and of the second substream into fragments of fixed size;
- grouping of the fragments obtained in a pair of symmetric substreams into pairs of symmetric fragments by tapping off, for each pair, a first fragment in the first substream of the pair from the start of the data relating to the pair of substreams, according to a usual direction of reading, and a second fragment in the second substream of the pair from the end of the data relating to the pair of substreams, according to a reverse direction of reading; and **in that**
- the step of concatenating the pairs into a sequence of symmetric pairs is applied to the pairs of fragments obtained and consists in tapping off the pairs of fragments arising from the pairs of substreams according to an order of predetermined iterative scanning of the pairs of substreams;
- the step of creating the binary train comprises the addition of an information item relating to the fixed size of the fragments.

3. Method for encapsulating a plurality of substreams of data according to Claim 1 or 2, **characterized in that** the information items relating to the sizes of the pairs of symmetric substreams comprise the sizes of pairs of symmetric substreams.

4. Method for encapsulating a plurality of substreams of data according to Claim 2, **characterized in that** the information items relating to the sizes of the pairs of symmetric substreams comprise a number of fragments per substream and the size of the pairs of fragments comprising a last fragment of one of the substreams of a pair of symmetric substreams.

5. Method for encapsulating a plurality of substreams of data according to Claim 1 or 2, **characterized in that** the step of creating the binary train comprises the encapsulation of an information item relating to a mode of encapsulation of the plurality of substreams.

6. Device for encapsulating a plurality of substreams of data coded in a binary train, a substream of coded data being obtained by entropy coding of a sub-sequence of symbols which is representative of an image or of a series of images, said device comprising means for creating a binary train encapsulating said plurality of substreams, said device being **characterized in that** it comprises means able to execute the following steps:
- scanning of said plurality of substreams according to a predetermined order of scanning of the image;
- grouping of the scanned substreams of data into pairs of substreams according to a predetermined scheduling of said substreams;
- on the basis of a pair, obtaining of a symmetric pair by reversal of an order of the data making up the second substream of the pair;
- concatenation of the pairs obtained into a sequence; and **in that**
- the means for creating the binary train comprise the encapsulation of said sequence and of information items relating to a number of substreams and to the sizes of the pairs of symmetric substreams.

7. Encapsulation device according to Claim 6, **characterized in that** it furthermore comprises means able to execute the following steps:
for each pair of symmetric substreams, said pair comprising a first and a second substream:
- splitting of the first and of the second substream into fragments of fixed size;
- grouping of the fragments obtained in a pair of symmetric substreams into pairs of symmetric fragments by tapping off, for each pair, a first fragment in the first substream of the pair from the start of the data relating to the pair of substreams, according to a usual direction of reading, and a second fragment in the second substream of the pair from the end of the data relating to the symmetric pair of substreams, according to a reverse direction of reading; and **in that**
- the step of concatenating the pairs into a sequence of symmetric pairs is applied to the pairs of fragments obtained; and
- the step of creating the binary train comprises the addition of an information item relating to the fixed size of the fragments.

8. Method for de-encapsulating a binary train comprising a plurality of substreams of coded data, a substream of data being obtained by entropy coding of a sub-sequence of symbols which is representative of an image or of a series of images, said binary train being obtained by the encapsulation method according to Claim 1,
**characterized in that** said de-encapsulation method comprises the following steps:
- extraction of the information items relating to a number of substreams and to sizes of pairs of substreams;
- scanning of the useful data of the binary train received, in the course of which the following steps are implemented:
- as long as the scanning has not finished:
- identification of a start position and of an end position of a pair on the basis of said extracted information items;
- dispatching of the useful data relating to the pair, said data being situated between said start and end positions, to a decoding device able to make two distinct processors perform a decoding in parallel of the useful data relating to the two elements of said pair, from said positions, the first in a usual direction and the second in a reverse direction of reading of the data.

9. Method for de-encapsulating a binary train according to Claim 8, **characterized in that**, said binary train having been created by the encapsulation method according to Claim 2, the extraction step furthermore comprises the extraction of information items relating to the fixed size of a fragment and the identification and dispatching steps are applied to the pairs of symmetric fragments.

10. Device for de-encapsulating a binary train comprising a plurality of substreams of coded data, a substream of data being obtained by entropy coding of a sub-sequence of symbols which is representative of an image or of a series of images, said binary train being obtained by the encapsulation method according to Claim 1, said device being **characterized in that** it comprises means able to execute the following steps:
- extraction of the information items relating to a number of substreams and to sizes of pairs of substreams;
- scanning of the useful data of the binary train received, in the course of which the following steps are implemented:
- as long as the scanning has not finished:
- identification of a start position and of an end position of a symmetric pair on the basis of said extracted information items;
- dispatching of the useful data relating to the pair situated between said start and end positions to a decoding device able to make two distinct processors perform a decoding in parallel of the useful data relating to the two elements of said pair, from said positions, the first in a usual direction and the second in a reverse direction of reading of the data.

11. Device for de-encapsulating a binary train according to Claim 10, said binary train having been created by the encapsulation method according to Claim 2, **characterized in that** the extraction means are able to extract furthermore information items relating to the size of a fragment and the identification means are applied to the pairs of symmetric fragments.

12. Device for decoding a plurality of substreams of coded data, a substream of data being obtained by entropy coding of a sub-sequence of symbols which is representative of an image or of a series of images, **characterized in that** it comprises means for receiving useful data relating to symmetric pairs obtained with the aid of the method for de-encapsulating a binary train according to Claims 8 and 9 and means for controlling decoding of the two elements of a pair received at distinct processors.

13. Signal carrying a binary train obtained by the method according to Claim 1.

14. Computer program downloadable from a communication network and/or stored on a medium readable by computer and/or executable by a microprocessor, **characterized in that** it comprises program code instructions for the execution of the method for encapsulating a plurality of substreams of coded data according to Claim 1.

15. Computer program downloadable from a communication network and/or stored on a medium readable by computer and/or executable by a microprocessor, **characterized in that** it comprises program code instructions for the execution of the method for de-encapsulating a plurality of substreams of coded data according to Claim 8.
